# EUROPÄISCHE PATENTSCHRIFT

(11) **EP 3 828 363 B1**
(45) Veröffentlichungstag und Bekanntmachung des Hinweises auf die Patenterteilung: **14.09.2022**
(21) Anmeldenummer: 20205251.0
(22) Anmeldetag: 02.11.2020
(51) Int. Cl.: E04G 5/00, E04G 19/00, G01B 11/00, G01B 21/04, G06T 7/70, G01B 5/00, G06F 3/01, G06K 9/00, G06Q 50/08

(54) **UNTERSTÜTZUNG VON ARBEITEN AN SCHALUNGEN UND GERÜSTEN**
SUPPORT OF WORK ON FORMWORK AND SCAFFOLDINGS
AIDE AUX TRAVAUX SUR COFFRAGES ET ÉCHAFAUDAGES

(30) Priorität: 27.11.2019 DE 102019218381
(43) Veröffentlichungstag der Anmeldung: 02.06.2021
(73) Patentinhaber: PERI SE, 89264 Weißenhorn (DE)
(72) Erfinder: KÖHLER, Jochen, 89264 Weißenhorn (DE)
(74) Vertreter: Maiwald Patent- und Rechtsanwaltsgesellschaft mbH

(56) Entgegenhaltungen:
- EP-A1- 3 518 075
- EP-A1- 3 779 875
- WO-A1-2020/201559
- CN-A- 106 445 168
- CN-A- 108 845 663
- DE-A1- 10 314 973

## Beschreibung

Die Erfindung betrifft die Unterstützung von Arbeiten an Schalungen und Gerüsten, wie etwa Montage, Aufbaus, Abbau und Demontage, mittels sensorischer Überwachung.

### Stand der Technik

Schalungen und Gerüste werden vielfach aus Standard-Komponenten und vorgefertigten Elementen zusammengesetzt, die durch ein Baukastensystem bereitgestellt werden. Auf diese Weise können Schalungen und Gerüste schnell hergestellt werden. Nach Gebrauch der Schalung bzw. des Gerüsts kann das Material beliebig wiederverwendet werden. Ein Beispiel für ein Baukastensystem, aus dem Schalungen hergestellt werden können, ist aus der WO 2005/040 525 A1 bekannt.

Je reichhaltiger das Sortiment eines solchen Baukastensystems ist, desto zahlreicher werden die Möglichkeiten, beim Zusammenbau der Schalung bzw. des Gerüsts Fehler zu machen. Solche Fehler, wie beispielsweise das Zusammensetzen technisch nicht zusammenpassender Bauelemente, lassen sich nur in begrenztem Umfang inhärent unterbinden, beispielsweise, indem an Bauelementen spezielle Strukturen angebracht oder angeformt werden, die ein falsches Zusammensetzen mechanisch sperren. Wer mit dem Baukastensystem arbeiten will, muss daher den richtigen Umgang damit lernen. Gerade bei Leiharbeitern und anderen nur kurzfristig Beschäftigten kann der Lernaufwand in Relation zur vorgesehenen Beschäftigungsdauer unangemessen hoch sein.

WO 2020/201 559 A1 offenbart ein Verfahren zur automatisierten Begutachtung eines Bauvorgangs und zur Kontrolle, dass Gewerke spezifikationsgemäß umgesetzt werden.

EP 3 779 875 A1 offenbart ein Verfahren zum Einmessen von Bauelementen auf einer Baustelle für die Errichtung oder den Ausbau eines Gebäudes auf der Basis optischer Mess- und Projektionsdaten.

CN 108 845 663 A offenbart ein weiteres Verfahren zur Unterstützung der Errichtung von Gebäuden und Anlagen, bei dem der zu erreichende Soll-Zustand durch Augmented Reality mit Bildern der Baustelle fusioniert wird und gleichzeitig der erreichte Ist-Zustand eingemessen wird.

### Aufgabe und Lösung

Es ist daher die Aufgabe der vorliegenden Erfindung, mit Hilfe einer sensorischen Überwachung Arbeiten an Gerüsten, insbesondere die Montage, den Aufbau, den Abbau und die Demontage, so zu unterstützen, dass Fehler möglichst frühzeitig korrigiert werden und die nachteiligen Auswirkungen dieser Fehler somit möglichst klein gehalten werden.

Diese Aufgabe wird erfindungsgemäß gelöst durch ein Verfahren gemäß Hauptanspruch. Weitere vorteilhafte Ausgestaltungen ergeben sich aus den darauf rückbezogenen Unteransprüchen.

### Offenbarung der Erfindung

Im Rahmen der Erfindung wurde ein computerimplementiertes Verfahren zur Unterstützung von Arbeiten an einer Schalung und/oder einem Gerüst entwickelt. Diese Arbeiten können insbesondere beispielsweise die Montage, den Aufbau, den Abbau und die Demontage der Schalung, bzw. des Gerüsts, umfassen.

Bei dem Verfahren werden zunächst physikalische Messdaten beschafft. Hierbei bedeutet "beschafft" insbesondere, dass das sensorische Erfassen und das im Folgenden näher erläuterte Verarbeiten an verschiedenen Orten und/oder auch von verschiedenen Entitäten durchgeführt werden können. Die Messdaten können also beispielsweise auf einer Baustelle erfasst und "as a Service" von einem externen Dienstleister in einer Cloud ausgewertet werden, um das Ergebnis der Auswertung möglichst schnell zu erhalten.

Die physikalischen Messdaten hängen von einer Ist-Handlung ab, die ein Arbeiter auf der Baustelle oder einem anderen Standort der Schalung bzw. des Gerüsts im Rahmen seiner Arbeiten ausführt. Das bedeutet, dass eine Änderung der Ist-Handlung sich in einer signifikanten Änderung der physikalischen Messdaten widerspiegelt und somit aus den physikalischen Messdaten ausgewertet werden kann.

So verursachen beispielsweise unterschiedliche Aktionen unterschiedliche Geräusche und lassen sich somit anhand von Audioaufnahmen aus dem Bereich, in dem der Arbeiter arbeitet, voneinander unterscheiden. Auch haben beispielsweise Schraubenschlüssel unterschiedlicher Größen unterschiedliche mechanische Abmessungen, so dass sie unterschiedlich klingen, wenn sie mit anderen Objekten in Berührung kommen oder sonst wie gehandhabt werden. Es lässt sich also anhand physikalischer Messdaten erkennen, was der Arbeiter tut und welche Werkzeuge und Betriebsmittel er verwendet.

Dabei ist die Zuordnung der physikalischen Messdaten zu Aktionen, die der Arbeiter ausführt, nicht immer eindeutig. Ist beispielsweise auf einer Audioaufnahme nur zu hören, dass ein bestimmter Schraubenschlüssel zum Anziehen einer Schraube benutzt wird, lässt dies noch keinen Schluss darauf zu, um welche Schraube es sich genau handelt. Es muss jedoch eine Schraube sein, die in "Hörweite" des Mikrofons ist, und die Größe der Schrauben muss auch zumindest näherungsweise zur Größe des Schraubenschlüssels passen.

Dieses Beispiel zeigt, dass zu einer messtechnisch gewonnenen Beobachtung auch mehrere Ist-Handlungen plausibel sein können. Es werden also im Rahmen des Verfahrens eine oder mehrere Ist-Handlungen ermittelt, zu denen die physikalischen Messdaten plausibel sind.

Weiterhin werden eine oder mehrere Soll-Handlungen ermittelt, die ausgehend vom aktuellen Stand der Arbeiten weiter in Richtung auf die Fertigstellung der Arbeiten führen. Beispielsweise können bei der Montage und beim Aufbau einer Schalung oder eines Gerüsts diejenigen Handlungen, die ausgehend vom aktuellen Montagestand der Schalung bzw. des Gerüsts weiter in Richtung auf die Fertigstellung der Schalung bzw. des Gerüsts führen, Soll-Handlungen sein. Umgekehrt können beim Abbau und bei der Demontage diejenigen Handlungen, die ausgehend vom aktuellen Demontagestand weiter in Richtung auf den vollständigen Abbau bzw. auf die vollständige Demontage führen, Soll-Handlungen sein. Dabei lässt sich der aktuelle Stand der Arbeiten, etwa der Montagestand oder Demontagestand, in beliebiger Weise sensorisch erfassen. Beispielsweise kann aus zuvor eindeutig identifizierten Ist-Handlungen, die vom Arbeiter nacheinander vorgenommen wurden, der aktuelle Stand der Arbeiten gleichsam "aufintegriert" werden.

Es kann anhand beliebiger vorzugebender Kriterien gemessen werden, welche Handlungen ausgehend von dem aktuellen Stand der Arbeiten, etwa dem aktuellen Montagestand, weiter in Richtung auf die Fertigstellung der Arbeiten führen, wie beispielsweise auf die Fertigstellung der Schalung bzw. des Gerüsts führen. So kann beispielsweise ein konkreter Montagestand als solcher festlegen, an welchen Stellen es aktuell überhaupt mechanisch möglich ist, weitere Elemente hinzuzufügen. Welche Elemente sich dort anfügen lassen und mit welchen Verbindungs- und Befestigungsmitteln dies zu geschehen hat, kann in Form weiterer technischer Regeln vorgegeben sein. An dieser Stelle kann auch beliebiges Vorwissen über zusammengehörende Baugruppen genutzt werden. Wenn beispielsweise eine Baugruppe aus zwei durch Verbindungsmittel verbundenen Bauelementen besteht und die beiden Bauelemente schon vorhanden sind, dann ist eine logische nächste Soll-Handlung, die Verbindungsmittel hinzuzufügen und damit die Baugruppe zu komplettieren.

Wenn ein geplantes Modell der zu erstellenden Schalung, bzw. des zu erstellenden Gerüsts, vorliegt, können insbesondere solche Handlungen als weiter in Richtung auf die Fertigstellung führend eingestuft werden, die einen Fortschritt bei der Umsetzung der Schalung bzw. des Gerüsts gemäß dem vorliegenden Modell herbeiführen. Derartige Handlungen können also Soll-Handlungen werden. Hingegen leistet beispielsweise der Anbau eines weiteren Elements, das mechanisch zwar an den aktuellen Montagestand passt, aber laut Modell nicht vorgesehen ist, keinen Beitrag zum Fortschritt. Vielmehr muss dieses Teil später möglicherweise sogar zurückgebaut werden, damit die Schalung bzw. das Gerüst gemäß dem Modell zur Gänze verwirklicht werden kann. Das Modell kann beispielsweise ein im Vorfeld geplantes dreidimensionales Modell, und/oder ein "Building Information-Modell", BIM-Modell, sein.

Es wird geprüft, inwieweit nach Maßgabe mindestens eines vorgegebenen Kriteriums korrekturbedürftige Abweichungen zwischen den Ist-Handlungen und den Soll-Handlungen bestehen. Dieses Kriterium kann insbesondere beispielsweise ein Maß dafür sein, inwieweit die Abweichung die vorgesehene technische Funktion der Schalung bzw. des Gerüsts beeinflusst oder gar Schäden an Bauelementen oder Betriebsmitteln verursachen kann. Werden beispielsweise zu kleine Verbindungselemente für die Verbindung von Bauelementen verwendet, kann dies dazu führen, dass die Bauelemente sich um ein unerwünschtes Spiel gegeneinander bewegen können. Möglicherweise halten die Verbindungselemente auch der Belastung der Schalung bzw. des Gerüsts im laufenden Betrieb nicht Stand. Wird beispielsweise ein zu großer Schraubenschlüssel zum Anziehen von Sechskantmuttern verwendet, wirkt die Kraft nicht wie vorgesehen auf die Kanten der Sechskantmuttern, sondern auf die Ecken, und die Muttern werden beschädigt.

In Antwort darauf, dass korrekturbedürftige Abweichungen bestehen, wird eine Information hinsichtlich der Abweichungen, und/oder hinsichtlich der einen oder mehreren Soll-Handlungen an den Arbeiter ausgegeben. Auf diese Weise wird der Arbeiter in die Lage versetzt, den Fehler zeitnah zu korrigieren, bevor er die Arbeiten am Gerüst bzw. an der Schalung weiter fortsetzt.

Dass menschliche Arbeiter Fehler machen und beispielsweise auch einmal zum falschen Bauelement oder zum falschen Verbindungselement greifen, ist unvermeidlich. Es wurde erkannt, dass eine zeitnahe Korrektur dieser Fehler gerade bei der Montage von Schalungen und Gerüsten ein erhebliches Maß an Arbeitszeit einspart. Schalungen und Gerüste sind mechanische Gebilde, deren Bauelemente in besonders hohem Maße buchstäblich aufeinander aufbauen. Wird also beispielsweise an einer Stelle ein falsches Bauelement eingesetzt und dieser Fehler erst später erkannt, stützen sich möglicherweise schon weitere Bauelemente hierauf ab. Es ist dann nicht möglich, einfach das falsche Bauelement herauszunehmen und durch das richtige Bauelement zu ersetzen, weil dann die restliche Struktur in sich zusammenfallen kann. Im Extremfall kann es nötig sein, die gesamte ab dem Zeitpunkt des Fehlers erfolgte weitere Montage rückgängig zu machen, bis schließlich das falsche Bauelement freigelegt ist und ausgetauscht werden kann.

Weiterhin hat gerade ein zeitnahes Feedback über Montagefehler für den Arbeiter einen Lerneffekt. Es wird also nicht nur dieser eine konkrete Montagefehler korrigiert oder im Ansatz unterbunden, sondern es werden idealerweise auch künftigen Fehlern gleicher Art vorgebeugt. Damit erstreckt sich im Endeffekt die Wirkung der sensorischen Überwachung auch in räumliche Bereiche und Zeiträume, die von dieser Überwachung nicht unmittelbar abgedeckt sind.

Analoges gilt für die Demontage und den Abbau. Hier können Fehler beispielsweise bewirken, dass ein für die Standsicherheit wichtiges Element zu früh entfernt wird und die Standsicherheit nicht mehr gegeben ist.

Physikalische Messdaten können von mindestens einem Sensor stammen, der vom Arbeiter bei der Arbeit mitgeführt wird. Ein solcher Sensor ist am nächsten an den vom Arbeiter ausgeführten Handlungen und kann somit Messdaten erfassen, die eine besonders präzise Identifikation der Ist-Handlungen ermöglichen. Die physikalischen Messdaten stammen dann von einem oder mehreren Sensoren, die mit mindestens einem Handschuh des Arbeiters verbunden sind und auf Handbewegungen des Arbeiters reagieren. Damit lässt sich insbesondere beispielsweise identifizieren, nach welchem Objekt der Arbeiter jeweils greift und in welcher Orientierung er es handhabt. So lässt sich beispielsweise auch erkennen, dass der Arbeiter zwar zum richtigen Bauelement gegriffen hat, aber dabei ist, dieses falsch herum einzubauen. Es lassen sich auch Aktionen in Bereichen kontrollieren, die beispielsweise von Kameras nicht einsehbar sind. Wenn der Arbeiter beispielsweise in einen engen Zwischenraum zwischen Bauelementen einer Schalung greift und ein Verriegelungselement bedient, um die Bauelemente gegeneinander zu verriegeln, kann über die Handbewegungen überwacht werden, ob das Verriegelungselement richtig bedient und eingerastet wurde. Darüber hinaus produziert die Kontrolle der Handbewegungen ein deutlich geringeres Datenvolumen als eine Kameraüberwachung, erfordert keine besonderen Lichtverhältnisse und ist datenschutzrechtlich deutlich unbedenklicher.

Alternativ oder auch in Kombination hierzu können physikalische Messdaten von mindestens einem akustischen Sensor stammen, der den Bereich, in dem der Arbeiter tätig ist, überwacht. Ein solcher Sensor muss nicht vom Arbeiter mitgeführt werden, sondern kann auch stationär angeordnet sein und ein größeres räumliches Gebiet überwachen. Die Auswertung ist nicht auf technisch erzeugte Geräusche beschränkt. So kann beispielsweise ein Geräusch, das eine besonders große Anstrengung des Arbeiters anzeigt, darauf hindeuten, dass der Arbeiter gerade zwei eigentlich nicht zusammenpassende Bauelemente gewaltsam "zusammenwürgt".

In einer weiteren besonders vorteilhaften Ausgestaltung charakterisieren beschaffte physikalische Messdaten die Position des Arbeiters in der Ebene oder im Raum. Beispielsweise kann die Position des Arbeiters mit Trägheitsnavigation und/oder mit funkgestützter Navigation verfolgt werden. Auf diese Weise lässt sich insbesondere kontrollieren, ob der Arbeiter seine Handlungen an der richtigen Stelle innerhalb einer Baustelle ausführt oder ob er beispielsweise im falschen Raum oder in sicherheitsbedenklicher Umgebung arbeitet.

In einer weiteren besonders vorteilhaften Ausgestaltung stammen physikalische Messdaten von mindestens einem Sensor, der an einem Betriebsmittel oder an einem Zugang zu einem Betriebsmittel angeordnet ist und auf eine vollendete oder versuchte Handhabung des Betriebsmittels reagiert. So kann beispielsweise registriert werden, wenn der Arbeiter im Begriff ist, ein bestimmtes Werkzeug zu verwenden. Ist beispielsweise vorgesehen, dass bestimmte Schrauben mit einem Drehmomentschlüssel angezogen werden, und greift der Arbeiter stattdessen zu einem herkömmlichen Schraubenschlüssel ohne Drehmomentbegrenzung, kann dieser Fehler, den man im Nachhinein der Schalung bzw. dem Gerüst optisch nicht ansehen würde, schon im Ansatz korrigiert werden. Auch lässt sich beispielsweise ein in Schubladen oder andere Fächer sortiertes Sortiment von Schrauben oder anderen Verbindungselementen dahingehend überwachen, welche Schublade bzw. welches Fach geöffnet wird. Ist beispielsweise vorgesehen, dass die aktuell zu verbindenden Bauelemente mit M8-Schrauben verbunden werden, und öffnet der Arbeiter stattdessen die Schublade mit den M6-Schrauben, kann er direkt auf den Fehler hingewiesen werden.

Wie zuvor erläutert, kann vorteilhaft mindestens eine Soll-Handlung durch einen Abgleich des aktuellen Stand der Arbeiten mit einem teilweisen oder vollständigen geplanten Modell der Schalung bzw. des Gerüsts ermittelt werden. Meistens gibt es ausgehend von einem konkreten aktuellen Stand der Arbeiten und einem konkreten geplanten Modell nur einige wenige sinnvolle Soll-Handlungen, mit denen die Realisierung der Schalung bzw. des Gerüsts gemäß dem geplanten Modell weiter vorangetrieben werden kann.

Alternativ oder auch in Kombination hierzu kann beispielsweise mindestens eine Soll-Handlung durch einen Abgleich des aktuellen Standes der Arbeiten, etwa eines Montagestandes der Schalung bzw. des Gerüsts, mit einem Katalog technischer Regeln eines Baukastensystems, aus dem die Schalung bzw. das Gerüst montiert wird, ermittelt werden. Derartige Regeln können beispielsweise vorschreiben, dass bestimmte Kombinationen von Bauelementen nur mit bestimmten Typen von Befestigungsmitteln realisiert werden dürfen, dass eine Mindestanzahl dieser Befestigungsmittel erforderlich ist, und/oder dass Abstände zwischen zwei Befestigungsmitteln ein vorgegebenes Maß nicht überschreiten dürfen. Die Regeln können nicht nur für die Montage und den Aufbau, sondern auch für die Demontage und den Abbau gelten. Auf diese Weise kann beispielsweise sichergestellt werden, dass die Standsicherheit auch während der Demontage und des Abbaus stets gegeben ist. Je mehr Vorwissen dieser Art genutzt wird, desto mehr lässt sich in einer konkreten Situation während der Arbeiten der Kreis der sinnvollen Soll-Handlungen einschränken.

Beispiele für korrekturbedürftige Abweichungen sind, wie zuvor erläutert, folgende Aktionen des Arbeiters:
- die Nutzung eines falschen Bauelements der Schalung bzw. des Gerüsts, oder den Versuch hierzu;
- die Nutzung eines falschen Verbindungselements und/oder Befestigungsmittels für Bauelemente der Schalung bzw. des Gerüsts untereinander, oder den Versuch hierzu;
- die Platzierung eines Bauelements, Verbindungselements und/oder Befestigungsmittels an einer falschen Position, oder den Versuch hierzu;
- die nicht bestimmungsgemäße Nutzung eines Werkzeugs oder anderen Betriebsmittels.

Die Nutzung falscher Bauelemente, Verbindungselemente oder Befestigungsmittel, sowie die Platzierung an einer falschen Position, sind typische Fehler, die von Arbeitern gemacht werden, die sich mit der konkreten Baustelle oder mit dem konkreten Baukastensystem nicht auskennen. Gerade die Montage und Demontage von Schalungen und Gerüsten wird häufig von Arbeitern durchgeführt, die auf vielen verschiedenen Baustellen tätig sind. Dies begünstigt Verwechslungen beispielsweise von der Art, dass der Arbeiter von einer ersten Baustelle ein erstes Befestigungsmittel in Erinnerung hat und dieses auch auf einer zweiten Baustelle verwendet, obwohl das dort genutzte Baukastensystem ein anderes Befestigungsmittel verlangt.

Die nicht bestimmungsgemäße Nutzung eines Werkzeugs oder anderen Betriebsmittels muss nicht unbedingt auf einer Verwechslung oder Unkenntnis beruhen. Vielmehr werden solche Ist-Handlungen gerade von erfahrenen Mitarbeitern häufig bewusst ausgeführt, aber nicht als Fehler erkannt. So kann es beispielsweise auf den ersten Blick eine "schlaue" Idee sein, eine Arbeit mit einem dafür nicht vorgesehenen Werkzeug auszuführen, weil sie sich dann schneller erledigen lässt. Man ist dann scheinbar schlauer als die Planung. Dabei wird gerne verkannt, dass es durchaus handfeste technische Gründe dafür geben kann, warum genau ein bestimmtes Werkzeug für die Erledigung der Arbeit vorgesehen ist. Wer etwa nicht weiß, dass eine bestimmte Schraubverbindung am Gerüst bei der Benutzung des Gerüsts in besonderem Maße dynamisch belastet wird, erkennt nicht die Notwendigkeit, zum Anziehen dieser Schraubverbindung den Drehmomentschlüssel zu verwenden. Stattdessen kommt ein herkömmlicher Maulschlüssel, der schneller zur Hand ist, zum Einsatz, und die Schraubverbindung wird zur Schwachstelle im statischen Verhalten des Gerüsts.

In einer weiteren besonders vorteilhaften Ausgestaltung wird zu mindestens einer Ist-Handlung des Arbeiters mindestens eine Soll-Handlung ermittelt, die im Hinblick auf ihre technische Funktion im Kontext der Schalung bzw. des Gerüsts an die Stelle der Ist-Handlung treten kann. Diese Soll-Handlung wird an den Arbeiter ausgegeben. Statt einen Fehler bei der Arbeit lediglich zu erkennen und zu melden, kann dann also auch gleich ein Vorschlag zur Behebung gemacht werden. Dabei können durchaus auch mehrere Soll-Handlungen vorgeschlagen werden, die im aktuellen Kontext sinnvoll erscheinen. Wenn dem Fachmann eine Liste mehrerer Vorschläge präsentiert wird, ist es für ihn insbesondere im Zusammenschau mit einer vorhandenen Planung häufig dennoch eindeutig, welche Soll-Handlung er statt der als fehlerhaft monierten Ist-Handlung vornehmen sollte.

Es kann aber auch beispielsweise aus mehreren Soll-Handlungen eine Soll-Handlung, für die eine Verwechslung mit der Ist-Handlung am plausibelsten ist, ausgewählt und an den Arbeiter ausgegeben werden. Wie zuvor erläutert, sind Verwechslungen eine besonders häufige Ursache für Montagefehler.

Die Information über die Soll-Handlung kann insbesondere beispielsweise mit einem Augmented Reality-Gerät an den Arbeiter ausgegeben werden. Augmented Reality bedeutet in diesem Zusammenhang insbesondere, dass der Arbeiter gleichzeitig sowohl die ausgegebene Information als auch seine Umgebung sehen kann. Es wird dann auch von einer Mixed Reality-Umgebung gesprochen. Der Arbeiter kann dann die angezeigte Information besonders gut mit der aktuellen Situation in Verbindung bringen und die richtige Soll-Handlung insgesamt schneller ausführen.

Zu diesem Zweck kann insbesondere beispielsweise in Antwort darauf, dass der Arbeiter zu einem falschen Bauelement, Verbindungselement oder Befestigungselement greift, über das Augmented Reality-Gerät eine Abbildung eines Bauelements, Verbindungselements oder Befestigungselements angezeigt werden, welches gemäß einer Soll-Handlung an die Stelle des falschen Elements treten kann. Das richtige Element ist dann besonders schnell gefunden.

Das Ermitteln einer oder mehrerer Ist-Handlungen, zu denen die physikalischen Messdaten plausibel sind, kann insbesondere beispielsweise zumindest teilweise mit einem trainierten Machine Learning-Modell erfolgen. Dieses Machine Learning-Modul kann insbesondere ein künstliches neuronales Netzwerk, KNN, umfassen oder sein.

Ein solches Machine Learning-Modul kann insbesondere eine Funktion beinhalten, deren Verhalten durch einstellbare Parameter charakterisiert ist. Es zeichnet sich durch eine große Kraft zur Verallgemeinerung aus. Das heißt, nach einem Training mit einer begrenzten Anzahl Situationen, die eine hinreichende Variabilität untereinander aufweisen, ist das Modul in der Lage, das erlernte Wissen auch auf viele Situationen anzuwenden, die nicht Gegenstand des Trainings waren.

Dies ist für die Erkennung von Ist-Handlungen aus physikalischen Messdaten, insbesondere aus den zuvor beispielhaft genannten Quellen, besonders vorteilhaft. Wenn unter ansonsten gleichen Umständen ein und dieselbe Ist-Handlung mehrfach wiederholt wird, dann werden keine zwei Zeitreihen physikalischer Messdaten, in denen diese Ist-Handlung verkörpert ist, genau identisch sein. Wenn beispielsweise die Handschuhe des Arbeiters mit Kraft- und/oder Lagesensoren versehen sind, dann werden sich bei jedem Anziehen einer Schraube mit einem Schraubenschlüssel Zeitreihen von Kräften und Lagen ergeben, die in gewisser Hinsicht qualitativ ähnlich sind, aber doch voneinander abweichen. Weiterhin können beispielsweise Audioaufnahmen, die auf einer Baustelle oder in einer Industrieanlage aufgenommen wurden, eine Mischung aus verschiedenen Geräuschen enthalten. Machine Learning-Module sind gut dazu geeignet, solche Mischungen in ihre Geräuschbestandteile aufzuschlüsseln. So sind gängige Klassifikationsalgorithmen dafür ausgelegt, für mehrere der möglichen Klassen (hier etwa: Ist-Handlungen) jeweils anzugeben, mit welcher Konfidenz die eingegebene Audioaufnahme zur jeweiligen Klasse gehört. Gleiche Konfidenzen für verschiedene Ist-Handlungen, etwa für das Verrücken eines Bauelements und für das Anziehen einer Schraube, können dann beispielsweise anzeigen, dass ein erster Arbeiter gerade ein Bauelement verrückt und gleichzeitig ein zweiter Arbeiter an einer anderen Stelle die Schraube anzieht.

Die im Rahmen des Verfahrens gewonnenen Informationen über korrekturbedürftige Abweichungen können insbesondere beispielsweise gesammelt und im Nachgang weiter ausgewertet werden, um den Arbeitsprozess bei der Montage, dem Aufbau, dem Abbau und der Demontage von Schalungen und Gerüsten besser zu verstehen. Es kann insbesondere beispielsweise ermittelt werden, welche Handlungen meistens fehlerlos erledigt werden und bei welchen Handlungen sich Fehler häufen. Derartige Erkenntnisse können dann wiederum in Produktverbesserungen beispielsweise von Baukastensystemen für Schalungen und Gerüste münden.

Wie eingangs erläutert, ist es beispielsweise in einem reichhaltigen Baukastensystem nicht praktikabel, die Bauelemente mechanisch gegen jedes prinzipiell mögliche falsche Zusammensetzen abzusichern. Wenn sich jedoch herausstellt, dass ein bestimmter Montagefehler zweier Bauelemente immer wieder gemacht wird, kann es sinnvoll sein, die Bauelemente mit Strukturen zu versehen, die diesen Montagefehler von vornherein vereiteln.

Wie zuvor erläutert, ist es besonders vorteilhaft, Handbewegungen, die ein Arbeiter ausführt, mit einem speziellen Handschuh zu erkennen. Daher wird hier auch ein Handschuh zur Erkennung von Handbewegungen eines Arbeiters offenbart. Dieser Handschuh umfasst eine Mehrzahl von Sensoren, die jeweils Messsignale registrieren. Die Messsignale hängen ab von
- einer Neigung des jeweiligen Sensors im Raum, und/oder
- einer Beschleunigung des jeweiligen Sensors, und/oder
- einer Kraftausübung auf den jeweiligen Sensor.

Je nach der Anzahl der Sensoren und dem Detaillierungsgrad der Messsignale können auf diese Weise insbesondere verschiedene Ist-Handlungen, die der Arbeiter ausführt, sowie verschiedene Objekte, die der Arbeiter greift, voneinander unterschieden werden.

Besonders vorteilhaft ist auf jedem Finger des Handschuhs sowie auf der Handfläche des Handschuhs mindestens ein Sensor angeordnet. Dies erleichtert die Zuordnung der Messsignale zu verschiedenen Ist-Signalen und Objekten. Wie zuvor erläutert, kann es beispielsweise wichtig sein, zwischen zwei Verbindungselementen zu unterscheiden, die auf Grund ihrer Ähnlichkeit miteinander verwechselt werden können und von denen nur eines richtig ist.

Das Verfahren wird computerimplementiert durchgeführt und ist zu diesem Zweck beispielsweise in einer Software verkörpert . Daher bezieht sich die Erfindung auch auf ein oder mehrere Computerprogramme mit maschinenlesbaren Anweisungen, die, wenn sie auf einem oder mehreren Computern ausgeführt werden, den einen oder die mehreren Computer dazu veranlassen, eines der beschriebenen Verfahren auszuführen.

Ebenso bezieht sich die Erfindung auch auf einen maschinenlesbaren Datenträger und/oder ein Downloadprodukt mit dem einen oder den mehreren Computerprogrammen. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
- Figur 1:: Ausführungsbeispiel des Verfahrens 100;
- Figur 2:: Beispielhafte Montagesituation mit Möglichkeiten zur Überwachung;
- Figur 3:: Beispielhafter Handschuh 4b für einen Arbeiter 4 mit Sensoren 4a.

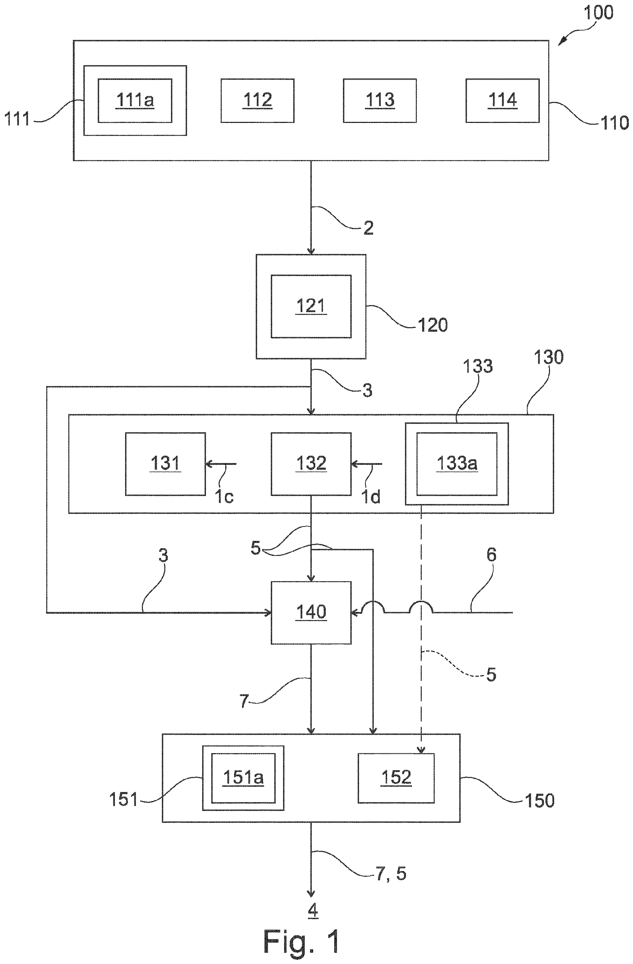

Figur 1 ist ein schematisches Ablaufdiagramm eines Ausführungsbeispiels des Verfahrens 100. In Schritt 110 werden physikalische Messdaten 2 beschafft, die von Ist-Handlungen 3 abhängen, die ein Arbeiter 4 im Rahmen der Arbeiten an einer Schalung 1a oder einem Gerüst 1b ausführt. In Schritt 120 werden eine oder mehrere Ist-Handlungen 3 ermittelt, zu denen die physikalischen Messdaten 2 plausibel sind. In Schritt 130 werden eine oder mehrere Soll-Handlungen 5 ermittelt, die ausgehend vom aktuellen Stand der Arbeiten weiter in Richtung auf die Fertigstellung der Arbeiten an der Schalung 1a bzw. dem Gerüst 1b führen. Hierbei können insbesondere beispielsweise die Ist-Handlungen 3 berücksichtigt werden, etwa um aus einer Folge identifizierter Ist-Handlungen 3 den aktuellen Stand der Arbeiten gleichsam "aufzuintegrieren". Dies ist jedoch nicht zwingend erforderlich.

In Schritt 140 wird geprüft, inwieweit es nach Maßgabe mindestens eines vorgegebenen Kriteriums 6 korrekturbedürftige Abweichungen 7 zwischen den Ist-Handlungen 3 und den Soll-Handlungen 5 gibt. Gegebenenfalls wird in Schritt 150 eine Information hinsichtlich der Abweichungen 7, und/oder hinsichtlich der einen oder mehreren Soll-Handlungen 5, an den Arbeiter 4 ausgegeben.

Innerhalb des Kastens 110 sind beispielhaft verschiedene Möglichkeiten erläutert, wie die physikalischen Messdaten 2 beschafft werden können.

Gemäß Block 111 stammen die Messdaten 2 von mindestens einem Sensor 4a erfasst werden, der vom Arbeiter 4 bei der Arbeit mitgeführt wird. Dieser Sensor 4a kann gemäß Block 111a beispielsweise mit einem Handschuh 4b des Arbeiters 4 verbunden sein und auf Handbewegungen des Arbeiters reagieren.

Gemäß Block 112 können Messdaten 2 von einem akustischen Sensor 8a stammen, der den Bereich, in dem der Arbeiter 4 tätig ist, überwacht.

Gemäß Block 113 charakterisiert zusätzlich zu Block 111a und/oder 112 mindestens ein Teil der beschafften Messdaten 2 die Position 4c des Arbeiters 4 in der Ebene oder im Raum.

Gemäß Block 114 können Messdaten 4 zusätzlich zu Block 111a und/oder 112 von mindestens einem Sensor 8b stammen, der an einem Betriebsmittel 9 oder an einem Zugang zu einem Betriebsmittel 9 angeordnet ist. Dieser Sensor 8b reagiert auf eine vollendete oder versuchte Handhabung des Betriebsmittels 9.

Innerhalb des Kastens 120 ist dargestellt, dass gemäß Block 121 das Ermitteln der einen oder mehreren Ist-Handlungen 3 zumindest teilweise mit einem trainierten Machine Learning-Modul erfolgen kann.

Innerhalb des Kastens 130 sind beispielhaft verschiedene Möglichkeiten dargestellt, wie Soll-Handlungen 5 ermittelt werden können.

Gemäß Block 131 kann mindestens eine Soll-Handlung 5 durch einen Abgleich des aktuellen Standes der Arbeiten mit einem teilweise oder vollständigen geplanten Modell 1c der Schalung 1a bzw. des Gerüsts 1b ermittelt werden.

Gemäß Block 132 kann mindestens eine Soll-Handlung 5 durch einen Abgleich des aktuellen Standes der Arbeiten mit einem Katalog 1d von technischen Regeln ermittelt werden. Diese technischen Regeln beziehen sich auf ein Baukastensystem, aus dem die Schalung 1a bzw. das Gerüst 1b montiert wird.

Gemäß Block 133 wird zu mindestens einer Ist-Handlung des Arbeiters mindestens eine Soll-Handlung 5 ermittelt, die im Hinblick auf eine technische Funktion im Kontext der Schalung 1a bzw. des Gerüsts 1b an die Stelle der Ist-Handlung 3 treten kann. Insoweit in Schritt 140 eine korrekturbedürftige Abweichung 7 festgestellt wird, wird in Block 152 diese Soll-Handlung 5 an den Arbeiter 4 ausgegeben. Dabei kann gemäß Block 133a insbesondere beispielsweise aus mehreren möglichen Soll-Handlungen 5 eine Soll-Handlung 5 ausgewählt werden, für die eine Verwechslung mi der Ist-Handlung 3 am plausibelsten ist.

Innerhalb des Kastens 150 sind beispielhaft einige Möglichkeiten dargestellt, wie der Arbeiter 4 über die korrekturbedürftige Abweichung 7, und/oder über die Soll-Handlung 5, informiert werden kann.

Gemäß Block 151 kann für die Ausgabe ein Augmented Reality-Gerät genutzt werden, wie beispielsweise eine Augmented Reality-Brille. Dass der Arbeiter 4 hierbei gleichzeitig sowohl die ausgegebene Information als auch seine Umgebung sehen kann, lässt sich in beliebiger Weise bewerkstelligen. So kann die ausgegebene Information beispielsweise auf eine zumindest teildurchsichtige Fläche projiziert werden, durch die der Arbeiter 4 die Umgebung sehen kann. Es kann aber auch beispielsweise mit einer Kamera ein Bild der Umgebung aufgenommen und mit der auszugebenden Information zu einem Gesamtbild kombiniert werden, das anschließend an den Arbeiter 4 ausgegeben wird.

Dabei kann insbesondere beispielsweise gemäß Block 151a in Antwort darauf, dass der Arbeiter 4 zu einem falschen Bauelement 10, Verbindungselement oder Befestigungselement greift, über das Augmented Reality-Gerät eine Abbildung eines Bauelements 10, Verbindungselements oder Befestigungselements angezeigt werden, welches gemäß einer Soll-Handlung 5 an die Stelle des falschen Elements treten kann.

Gemäß Block 152 kann, wie zuvor erwähnt, eine Soll-Handlung 5, die an die Stelle der Ist-Handlung 3 treten kann, an den Arbeiter 4 ausgegeben werden.

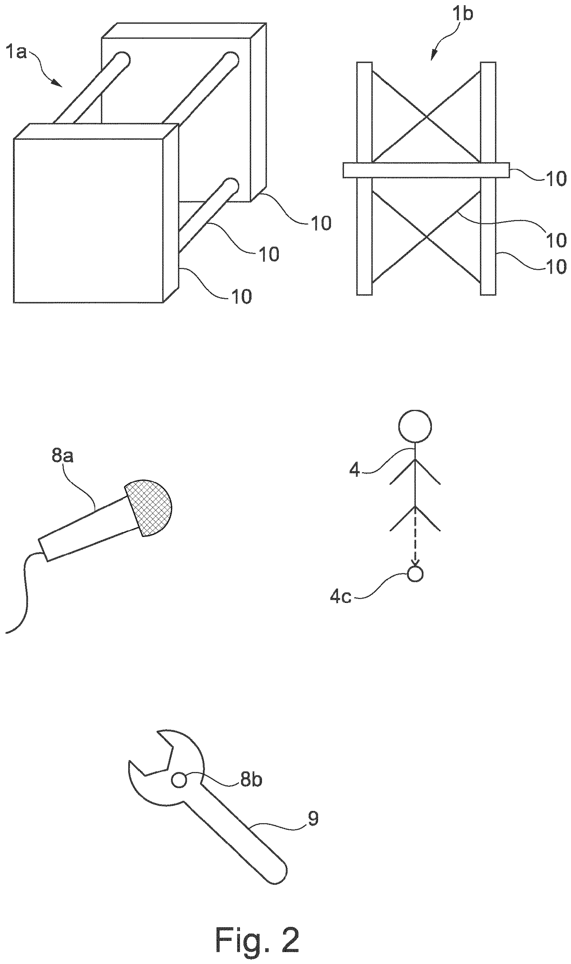

Figur 2 zeigt eine beispielhafte Montagesituation, in der das Verfahren 100 genutzt werden kann. Ein Arbeiter 4 führt Arbeiten an einer Verschalung 1a und/oder an einem Gerüst 1b aus und handhabt hier jeweils Bauelemente 10. Dabei kann seine Position 4c jeweils überwacht werden.

Der Bereich, in dem der Arbeiter 4 tätig ist, kann dabei mit einem Mikrofon 8a akustisch überwacht werden, um aus dem hiermit gewonnenen Audiosignal auf die ausgeführten Ist-Handlungen 3 zu schließen. Alternativ oder auch in Kombination hierzu kann ein Betriebsmittel 9, hier ein Werkzeug, mit einem Sensor 8b versehen sein, der registriert, wann das Betriebsmittel 9 gehandhabt wird. Es kann dann beispielsweise erkannt werden, wenn der Arbeiter 4 im Begriff ist, das Betriebsmittel 9 für einen ungeeigneten Zweck zu nutzen.

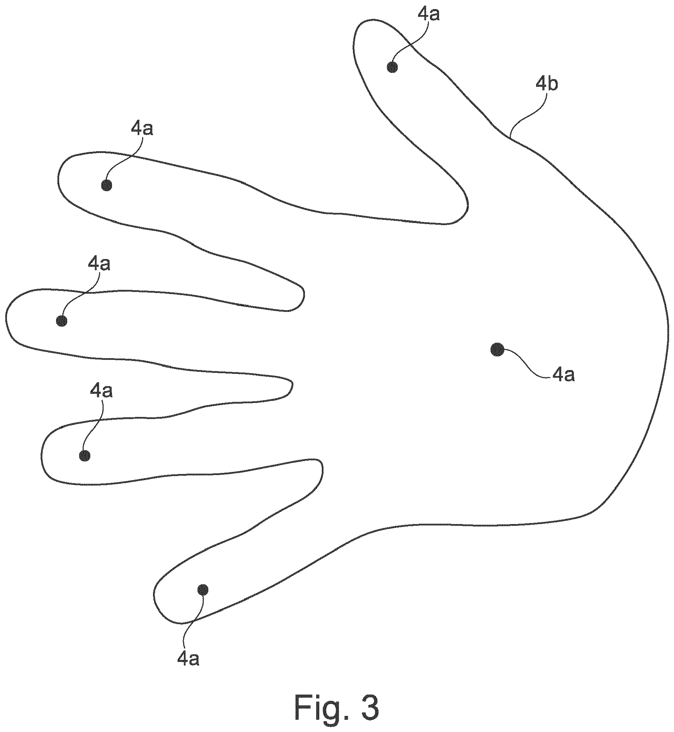

Figur 3 zeigt eine weitere Möglichkeit für die sensorische Erfassung von Messdaten 2, aus denen auf Ist-Handlungen 3 geschlossen werden kann. Ein Handschuh 4b für den Arbeiter ist mit Sensoren 4a an den Fingern sowie auf der Handfläche versehen. Diese Sensoren registrieren Handbewegungen des Arbeiters 4. Die Sensoren 4a können also beispielsweise Neigungen im Raum und/oder Beschleunigungen messen. Sie können alternativ oder in Kombination hierzu beispielsweise auf Druck reagieren. Somit kann erfasst werden, was der Arbeiter 4 gerade mit seinen Händen tut.

### Bezugszeichenliste

- 1a: Schalung
- 1b: Gerüst
- 1c: geplantes Modell für Schalung 1a bzw. Gerüst 1b
- 1d: Katalog mit technischen Regeln
- 2: physikalische Messdaten, hängen von Ist-Handlungen 3 ab
- 3: Ist-Handlungen des Arbeiters 4
- 4: Arbeiter
- 4a: Sensor, von Arbeiter 4 bei der Arbeit mitgeführt
- 4b: Handschuh für Arbeiter 4
- 4c: Position des Arbeiters 4 in der Ebene oder im Raum
- 5: Soll-Handlung, die in Richtung auf Fertigstellung führt
- 6: Kriterium für Korrekturbedarf
- 7: Abweichung zwischen Ist-Handlungen 3 und Soll-Handlungen 5
- 8a: akustischer Sensor
- 8b: Sensor für Betriebsmittel 9 oder Zugang hierzu
- 9: Betriebsmittel
- 10: Bauelement für Schalung 1a bzw. Gerüst 1b
- 100: Verfahren zur Unterstützung der Arbeiten
- 110: Beschaffen physikalischer Messdaten 2
- 111: Nutzen von Daten 2 eines mitgeführten Sensors 4a
- 111a: Nutzen von Daten 2 eines Sensors 4a am Handschuh 4b
- 112: Nutzen von Daten 2 eines akustischen Sensors 8a
- 113: Nutzen von Daten 2, die die Position 4c des Arbeiters 4 charakterisieren
- 114: Nutzen von Daten 2 eines Sensors 8b für ein Betriebsmittel 9
- 120: Ermitteln von Ist-Handlungen 3
- 121: Ermitteln von Ist-Handlungen 3 mit Machine Learning-Modul
- 130: Ermitteln von Soll-Handlungen 5
- 131: Abgleich des Standes der Arbeiten mit geplantem Modell 1c
- 132: Abgleich des Standes der Arbeiten mit technischen Regeln 1d
- 133: Ermitteln von Soll-Handlung 5, die Ist-Handlung 3 technisch ersetzt
- 133a: Ermitteln von Soll-Handlung 5, für die Verwechslung plausibel ist
- 140: Prüfen auf korrekturbedürftige Abweichungen 7
- 150: Ausgeben einer Information an den Arbeiter 4
- 151: Ausgeben mit Augmented Reality-Gerät
- 151a: Anzeigen eines richtigen Elements, das falsches Element ersetzen soll
- 152: Ausgeben der in Block 133 ermittelten Soll-Handlung 5

## Patentansprüche

1. Computerimplementiertes Verfahren (100) zur Unterstützung von Arbeiten an einer Schalung (1a) und/oder einem Gerüst (1b) mit den Schritten:
• Beschaffen (110) physikalischer Messdaten (2), die von einer Ist-Handlung (3), die ein Arbeiter (4) im Rahmen der Arbeiten ausführt, abhängen;
• Ermitteln (120) einer oder mehrerer Ist-Handlungen (3), zu denen die physikalischen Messdaten (2) plausibel sind;
• Ermitteln (130) einer oder mehrerer Soll-Handlungen (5), die ausgehend vom aktuellen Stand der Arbeiten weiter in Richtung auf die Fertigstellung der Arbeiten an der Schalung (1a) bzw. dem Gerüst (1b) führen;
• Prüfen (140), inwieweit nach Maßgabe mindestens eines vorgegebenen Kriteriums (6) korrekturbedürftige Abweichungen (7) zwischen den Ist-Handlungen (3) und den Soll-Handlungen (5) bestehen; und
• Ausgeben (150) einer Information hinsichtlich der Abweichungen (7), und/oder hinsichtlich der einen oder mehreren Soll-Handlungen (5), an den Arbeiter (4) in Antwort darauf, dass korrekturbedürftige Abweichungen (7) bestehen,
wobei physikalische Messdaten
• von mindestens einem Sensor (4a) stammen (111), der vom Arbeiter (4) bei der Arbeit mitgeführt wird, wobei der oder die Sensoren (4a) mit mindestens einem Handschuh (4b) des Arbeiters (4) verbunden sind (111a) und auf Handbewegungen des Arbeiters (4) reagieren, und/oder
• von mindestens einem akustischen Sensor (8a) stammen (112), der den Bereich, in dem der Arbeiter (4) tätig ist, überwacht.

2. Verfahren (100) nach Anspruch 1, wobei physikalische Messdaten (2) die Position (4c) des Arbeiters (4) in der Ebene oder im Raum charakterisieren (113).

3. Verfahren (100) nach einem der Ansprüche 1 bis 2, wobei physikalische Messdaten (2) von mindestens einem Sensor (8b) stammen (114), der an einem Betriebsmittel (9) oder an einem Zugang zu einem Betriebsmittel (9) angeordnet ist und auf eine vollendete oder versuchte Handhabung des Betriebsmittels (9) reagiert.

4. Verfahren (100) nach einem der Ansprüche 1 bis 3, wobei mindestens eine Soll-Handlung (5) durch einen Abgleich des aktuellen Standes der Arbeiten mit einem teilweisen oder vollständigen geplanten Modell (1c) der Schalung (1a) bzw. des Gerüsts (1b) ermittelt wird (131).

5. Verfahren (100) nach einem der Ansprüche 1 bis 4, wobei mindestens eine Soll-Handlung (5) durch einen Abgleich des aktuellen Standes der Arbeiten mit einem Katalog (1d) technischer Regeln eines Baukastensystems, aus dem die Schalung (1a) bzw. das Gerüst (1b) montiert wird, ermittelt wird (132).

6. Verfahren (100) nach einem der Ansprüche 1 bis 5, wobei die korrekturbedürftige Abweichung (7) eine oder mehrere der folgenden Aktionen des Arbeiters (4) umfasst:
• die Nutzung eines falschen Bauelements (10) der Schalung (1a) bzw. des Gerüsts (1b), oder den Versuch hierzu;
• die Nutzung eines falschen Verbindungselements und/oder Befestigungsmittels für Bauelemente (10) der Schalung (1a) bzw. des Gerüsts (1b) untereinander, oder den Versuch hierzu;
• die Platzierung eines Bauelements (10), Verbindungselements und/oder Befestigungsmittels an einer falschen Position, oder den Versuch hierzu;
• die nicht bestimmungsgemäße Nutzung eines Werkzeugs oder anderen Betriebsmittels (9).

7. Verfahren (100) nach einem der Ansprüche 1 bis 6, wobei zu mindestens einer Ist-Handlung (3) des Arbeiters (4) mindestens eine Soll-Handlung (5) ermittelt wird (133), die im Hinblick auf ihre technische Funktion im Kontext der Schalung (1a) bzw. des Gerüsts (1b) an die Stelle der Ist-Handlung (3) treten kann, und wobei diese Soll-Handlung (5) an den Arbeiter (4) ausgegeben wird (152).

8. Verfahren (100) nach Anspruch 7, wobei aus mehreren Soll-Handlungen (5) eine Soll-Handlung (5) ausgewählt wird (133a), für die eine Verwechslung mit der Ist-Handlung (3) am plausibelsten ist.

9. Verfahren (100) nach einem der Ansprüche 1 bis 8, wobei die Information mit einem Augmented Reality-Gerät an den Arbeiter (4) ausgegeben wird (151), so dass der Arbeiter (4) gleichzeitig sowohl diese Information als auch seine Umgebung sehen kann.

10. Verfahren (100) nach Anspruch 9, wobei in Antwort darauf, dass der Arbeiter (4) zu einem falschen Bauelement (10), Verbindungselement oder Befestigungselement greift, über das Augmented Reality-Gerät eine Abbildung eines Bauelements (10), Verbindungselements oder Befestigungselements angezeigt wird (151a), welches gemäß einer Soll-Handlung (5) an die Stelle des falschen Elements treten kann.

11. Verfahren (100) nach einem der Ansprüche 1 bis 10, wobei das Ermitteln (120) der einen oder mehreren Ist-Handlungen (3) zumindest teilweise mit einem trainierten Machine Learning-Modul erfolgt (121).

12. Ein oder mehrere Computerprogramme, enthaltend maschinenlesbare Anweisungen, die, wenn sie auf einem oder mehreren Computern (100) ausgeführt werden, den einen oder die mehreren Computer dazu veranlassen, ein Verfahren nach einem der Ansprüche 1 bis 11 auszuführen.

13. Maschinenlesbarer Datenträger und/oder Downloadprodukt mit dem einen Computerprogramm oder den mehreren Computerprogrammen nach Anspruch 12.

## Claims

1. A computer-implemented method (100) for aiding work on a formwork (1a) and/or a scaffold (1b) with the steps of:
• obtaining (110) physical measurement data (2) that is dependent on an actual action (3) that a worker (4) performs in the course of the work;
• determining (120) one or more actual actions (3) with which the physical measurement data (2) are plausible;
• determining (130) one or more nominal actions (5) that, starting from the present state of the work, lead further towards completion of the work on the formwork (1a), respectively on the scaffold (1b);
• checking (140) to which extent, as per at least one predetermined criterion (6), deviations (7) necessitating correction exist between the actual actions (3) and the nominal actions (5);
• outputting (150) an information regarding the deviations (7), and/or regarding the one or more nominal actions (5), to the worker (4) in response to determining that deviations (7) necessitating correction exist,
wherein physical measurement data
• originate (111) from at least sensor (4a) carried by the worker (4) during the work, wherein the sensor or the sensors (4a) are connected (111b) with at least one glove (4b) of the worker (4) and react to hand movements of the worker (4), and/or
• originate (112) from at least one acoustic sensor (8a) that monitors the area in which the worker (4) is busy.

2. The method (100) of claim 1, wherein physical measurement data (2) characterize (113) the position (4c) of the worker (4) in the plane or in space.

3. The method (100) of any one of claims 1 to 2, wherein physical measurement data (2) originate (114) from at least one sensor (8b) that is disposed on an equipment (9) or on an access to an equipment (9) and reacts to a completed or attempted operation of the equipment (9).

4. The method (100) of any one of claims 1 to 3, wherein at least one nominal action (5) is determined (131) by comparing the present state of the work with a partially or completely planned model (1c) of the formwork (1a), respectively of the scaffold (1b).

5. The method (100) of any one of claims 1 to 4, wherein at least one nominal action (5) is determined (132) by comparing the present state of the work with a catalogue (1d) of technical rules of a modular system from which the formwork (1a), respectively the scaffold (1b), is assembled.

6. The method of any one of claims 1 to 5, wherein the deviation (7) necessitating correction comprises one or more of the following actions of the worker (4):
• the use of a wrong building element (10) of the formwork (1a), respectively of the scaffold (1b), or the attempt of such use;
• the use of a wrong mutual connection element and/or fixing element for building elements (10) of the formwork (1a), respectively of the scaffold (1b), or the attempt of such use;
• the placing of a building element (10), connection element and/or fixing element at a wrong position, and/or the attempt of such placing;
• the non-conventional use of a tool or other equipment (9).

7. The method (100) of any one of claims 1 to 6, wherein, for at least one actual action (3) of the worker (4), at least one nominal action (5) is determined (133) that, regarding its technical function in the context of the formwork (1a), respectively of the scaffold (1b), can take the place of the actual action (3), and wherein this nominal action (5) is outputted (152) to the worker (4).

8. The method (100) of claim 7, wherein, out of multiple nominal actions (5), a nominal action (5) for which a confusion with the actual action (3) is most plausible is selected (133a).

9. The method (100) of any one of claims 1 to 8, wherein the information is outputted (151) to the worker (4) with an augmented reality device, such that the worker (4) can simultaneously see this information as well as his environment.

10. The method (100) of claim 9, wherein in response to the worker (4) reaching for a wrong building element (10), connection element or fixing element, an image of a building element (10), connection element or fixing element that, according to a nominal action (5), can take the place of the wrong element is displayed (151a) via the augmented reality device.

11. The method (100) of any one of claims 1 to 10, wherein the determining (120) of the one or more actual actions (3) is performed (121) at least partially with a trained machine learning module.

12. One or more computer programs, comprising machine-readable instructions that, when executed on one or more computers, cause the one or more computers to execute a method (100) of any one of claims 1 to 11.

13. A machine-readable data carrier and/or a download product with the one computer program or the multiple computer programs of claim 12.

## Revendications

1. Procédé (100) mis en œuvre par ordinateur pour assister des travaux réalisés sur un coffrage (1a) et/ou un échafaudage (1b), comportant les étapes consistant à :
• obtenir (110) des données de mesure physiques (2) qui dépendent d'une manipulation réelle (3) qu'un travailleur (4) effectue dans le cadre des travaux ;
• déterminer (120) une ou plusieurs manipulations réelles (3) pour lesquelles les données de mesure physiques (2) sont plausibles ;
• déterminer (130) une ou plusieurs manipulations prescrites (5) qui contribuent, en partant de l'état actuel des travaux, à l'achèvement des travaux sur le coffrage (1a) ou l'échafaudage (1b) ;
• examiner (140) dans quelle mesure il existe, d'après au moins un critère prédéfini (4), des divergences entre les manipulations réelles (3) et les manipulations prescrites (5) nécessitant une correction (7) ; et
• émettre (150) au travailleur (4) une information concernant les divergences (7) et/ou concernant la ou les manipulations prescrites (5), en réponse à l'existence de divergences (7) nécessitant une correction,
dans lequel les données de mesure physiques
• proviennent (111) d'au moins un capteur (4a) qui accompagne le travailleur (4) lors du travail, dans lequel le ou les capteurs (4a) sont reliés (111a) à au moins un gant (4b) du travailleur (4) et réagissent à des mouvements de main du travailleur (4), et/ou
• proviennent (112) d'au moins un capteur acoustique (8a) qui surveille la zone dans laquelle le travailleur (4) évolue.

2. Procédé (100) selon la revendication 1, dans lequel les données de mesure physiques (4) caractérisent (113) la position (4c) du travailleur (4) dans le plan ou dans l'espace.

3. Procédé (100) selon l'une des revendications 1 à 2, dans lequel les données de mesure physiques (2) proviennent (114) d'au moins un capteur (8b) qui est agencé sur un matériel (9) ou sur un accès à un matériel (9) et qui réagit à une manipulation achevée ou tentée du matériel (9).

4. Procédé (100) selon l'une des revendications 1 à 3, dans lequel au moins une manipulation prescrite (5) est déterminée (131) par une comparaison de l'état actuel des travaux avec un modèle (1c) partiellement ou entièrement planifié du coffrage (1a) ou de l'échafaudage (1b).

5. Procédé (100) selon l'une des revendications 1 à 4, dans lequel au moins une manipulation prescrite (5) est déterminée (132) par une comparaison de l'état actuel des travaux avec un catalogue (1d) de règles techniques d'un système modulaire à partir duquel le coffrage (1a) ou l'échafaudage (1b) est monté.

6. Procédé (100) selon l'une des revendications 1 à 5, dans lequel l'écart (7) nécessitant une correction inclut une ou plusieurs des actions suivantes du travailleur (4) :
• l'utilisation ou la tentative d'utilisation d'un élément de construction incorrect (10) du coffrage (1a) ou de l'échafaudage (1b) ;
• l'utilisation ou la tentative d'utilisation d'un élément de liaison incorrect et/ou d'un moyen de fixation incorrect pour des éléments de construction (10) du coffrage (la) ou de l'échafaudage (1b) sousjacent ;
• le placement ou la tentative de placement d'un élément de construction (10), d'un élément de liaison et/ou d'un moyen de fixation dans une position incorrecte ;
• l'utilisation non conforme d'un outil ou d'un autre matériel (9).

7. Procédé (100) selon l'une des revendications 1 à 6, dans lequel au moins une manipulation prescrite (5) est déterminée (133) jusqu'à au moins une manipulation réelle (3) du travailleur (4), laquelle manipulation prescrite peut remplacer la manipulation réelle (3) au regard de sa fonction technique dans le contexte du coffrage (la) ou de l'échafaudage (1b), et dans lequel cette manipulation prescrite (5) est émise (152) au travailleur (4).

8. Procédé (100) selon la revendication 7, dans lequel parmi plusieurs manipulations prescrites (5) est choisie (133a) une manipulation prescrite (5) pour laquelle une confusion avec la manipulation réelle (3) est la plus plausible.

9. Procédé (100) selon l'une des revendications 1 à 8, dans lequel l'information est émise au travailleur (4) avec un appareil à réalité augmentée, de sorte que le travailleur (4) peut voir simultanément aussi bien cette information que son environnement.

10. Procédé (100) selon la revendication 9, dans lequel en réponse au fait que le travailleur (4) saisit un élément de construction (10), un élément de liaison ou un élément de fixation incorrect, une représentation d'un élément de construction (10), d'un élément de liaison ou d'un élément de fixation est affichée (151a) par l'intermédiaire de l'appareil à réalité augmentée, lequel élément de construction, de liaison ou de fixation peut remplacer l'élément incorrect selon une manipulation prescrite (5).

11. Procédé (100) selon l'une des revendications 1 à 10, dans lequel la détermination (120) de la ou des manipulations réelles (3) s'effectue (121) au moins en partie avec un module d'apprentissage automatique entraîné.

12. Un ou plusieurs programmes informatiques contenant des instructions lisibles par machine qui, lorsqu'elles sont exécutées sur un ou plusieurs ordinateurs (100), amènent l'ordinateur ou les ordinateurs à mettre en œuvre un procédé selon l'une des revendications 1 à 11.

13. Support de données lisible par machine et/ou produit disponible en téléchargement avec le programme informatique ou les programmes informatiques selon la revendication 12.
